# EUROPÄISCHE PATENTANMELDUNG

(11) **EP 4 622 030 A2**
(43) Veröffentlichungstag der Anmeldung: **24.09.2025**
(21) Anmeldenummer: 25189259.2
(22) Anmeldetag: 24.01.2020
(51) Int. Cl.: H02G 11/00

(54) **ENERGIEFÜHRUNGSKETTE MIT SEITENSTABILISIERTEN LASCHEN AUS KUNSTSTOFF**

(30) Priorität: 25.01.2019 DE 202019100466 U
(62) Teilanmeldung aus: 20704785.3
(71) Anmelder: Igus GmbH, 51147 Köln (DE)
(72) Erfinder: Hermey, Andreas, 53773 Hennef (DE); Jaeker, Thilo-Alexander, 53757 Sankt Augustin (DE); Strack, Stefan, 53639 Königswinter (DE); Theiß, Georg, 50678 Köln (DE)
(74) Vertreter: Lippert Stachow Patentanwälte Rechtsanwälte

(57) **Zusammenfassung**

Die Erfindung betrifft Energieführungsketten mit seitenstabilisierten Laschen aus Kunststoff. Eine Lasche (102) greift dabei mit einem kreisbogenförmigen Führungsbereich (120A, 120B) in einen Freiraum (123) hinter einen Haltevorsprung (121A, 121B) an der anderen Lasche. Der Haltevorsprung (121A, 121B) dient zur Seitenstabilisierung.

Erfindungsgemäß ist der Haltevorsprung (121A, 121B) räumlich beschränkt auf einen mittleren Höhenabschnitt (h1) der Laschenhöhe und in Umfangsrichtung um die Schwenkachse (A) begrenzt dimensioniert. Somit wird der kreisbogenförmige Führungsbereich (120A, 120B) lediglich über einen kleineren Anteil, bevorzugt ≤33%, seiner Bogenlänge bzw. Winkelweite (α) vom Haltevorsprung (121A, 121B) übergriffen ist und bleibt über einen überwiegenden Anteil, insbesondere ≥66%, seiner Bogenlänge bzw. Winkelweite (β-α) nicht vom Haltevorsprung (121A, 121B) übergriffen d.h. seitlich frei. Dies erleichtert insbesondere die Montage der Kettenlaschen bzw. deren Verbindung miteinander.

## Beschreibung

Die vorliegende Erfindung betrifft allgemein das Gebiet der Energieführungsketten zur dynamischen Führung von Leitungen zwischen zwei relativbeweglichen Anschlussstellen. Energieführungsketten haben typisch Kettenglieder mit jeweils zwei gegenüberliegenden Laschen (auch Seitenlaschen oder Seitenteile genannt), welche über mindestens einen, meist zwei Querstege miteinander verbunden sind, entweder fest oder lösbar. Die Kettenglieder definieren einen inneren Aufnahmeraum zum Führen der Leitungen, wie z.B. Kabel zur elektrischen Signal- oder Stromversorgung oder pneumatische bzw. hydraulische Schläuche.

Die vorliegende Erfindung betrifft die Bauweise bzw. Gestaltung der Kettenlaschen für sich genommen, und insbesondere Laschen, die aus Kunststoff hergestellt sind, besonders bevorzugt im Spritzgussverfahren. Speziell bei Energieführungsketten aus Kunststofflaschen haben sich zwei Typen sehr bewährt.

Bei einem ersten Typ hat die Energieführungskette, wie z.B. in WO 95/04231 A1 beschrieben, zwei Laschenstränge, die jeweils aus zwei unterschiedlichen Arten von Laschen aufgebaut sind, nämlich aus alternierend aufeinander folgenden Innenlaschen und Außenlaschen, mit jeweils unterschiedlicher Gestaltung. Dabei haben die Innenlaschen dem Ketteninneren zugewandte innere Überlappungsbereiche und die Außenlaschen äußere Überlappungsbereiche. Benachbarte Laschen überlappen jeweils einseitig mit ihren Überlappungsbereichen und sind mit diesen in geeigneter Weise gelenkig miteinander verbunden, so dass sie relativ zueinander in einer Ebene um eine Schwenkachse zueinander verschwenkbar sind. Die schwenkbare Verbindung erfolgt typisch durch eine Bolzen-/Bohrung- bzw. eine Zapfen-/Aufnahme-Drehgelenkverbindung. Jede Lasche des ersten Typs ist in Draufsicht typisch flach, mit in einer Ebene liegenden endseitigen Überlappungsbereichen.

Beim zweiten Typ hat die Energieführungskette zwei Laschenstränge, die aus jeweils gleichartigen sogenannten gekröpften Laschen, insbesondere aus Kunststoff, aufgebaut sind. Eine solche Lasche, wie z.B. im Patent DE 3 531 066 C2 bzw. US 4,813,224 A gezeigt, hat innenseitig einen ersten Überlappungsbereich und gegenüber diesem nach seitlich außen versetzt bzw. gekröpft einen zweiten Überlappungsbereich. Die gekröpfte Lasche hat in Draufsicht meist eine Kontur ähnlich einer gestreckten Z-Form. Auch gekröpfte Laschen werden mit einseitig überlappenden Überlappungsbereichen in einer Ebene schwenkbar miteinander verbunden, ebenfalls typisch über eine Zapfen-/Aufnahme-Drehgelenkverbindung.

Die Erfindung ist auf die aus Kunststoff gefertigten Laschen beider vorgenannter Typen gleichermaßen anwendbar. Beim zweiten Typ werden jedem Laschenstrang typisch baugleiche gekröpfte Laschen eingesetzt, wobei die gekröpften Laschen des einen Strangs zu denen des gegenüberliegenden Strangs spiegelsymmetrisch sind. Bei Energieführungsketten mit Innen-/Außenlaschen bzw. des ersten Typs kann jede Lasche in jedem Laschenstrang verwendbar sein. Ferner ist es beim ersten Typ möglich, wie in WO 98/46906 A1 vorgeschlagen, Laschen des ersten Typs so zu gestalten, dass die Lasche in jedem Strang um 180° gedreht verwendbar ist, um je nach Orientierung andere Anschlagwinkel vorzugeben, z.B. zwecks Vorspannung. Die Erfindung ist besonders vorteilhaft, aber nicht ausschließlich, auf eine Innenlasche dieser Art anwendbar.

Gattungsgemäße Kettenlaschen aus Kunststoff beider Typen, d.h. alternierend verbindbare Innen-/Außenlaschen oder gekröpfte Laschen, sind jeweils für eine nur einseitige Überlappung benachbarter Überlappungsbereiche ausgeführt. Nicht Gegenstand der vorliegenden Erfindung sind daher sogenannte Gabellaschen. Diese grundsätzlich andere Bauart hat ein in Draufsicht etwa U-förmiges gabelförmiges Ende, in welches die benachbarte Lasche eingreift und beidseitig überlappt wird. Diese Bauart hat sich, jedenfalls bei Kunststofflaschen, nicht durchgesetzt **u.a.** wegen hohem Materialbedarf und resultierendem Gewicht.

Bei Energieführungsketten treten insbesondere bei freitragenden Anwendungen (wenn das Obertrum freitragend über dem Untertrum verläuft), bei langen Verfahrwegen oder auch bei Horizontalanwendungen, hohe Querkräfte bzw. Momente auf, die eine hohe Seitenstabilität der Laschenverbindung erfordert. Dies ist bei nur einseitig überlappenden Laschen besonders wichtig. Es muss z.B. unbedingt vermieden werden, dass sich Gelenkverbindungen durch Querkräfte im laufenden Betrieb auftrennen.

Für den ersten Kettentyp hat z.B. WO 95/04231 A1 vorgeschlagen, dass zumindest an den Außenlaschen die Querstege an ihren Enden so aufweiten, dass diese den Überlappungsbereich der benachbarten Innenlaschen übergreifen und zugleich als Sicherung gegen Trennung der Laschen quer zur Längsrichtung wirken.

Zur Verbesserung der Seitenstabilität beider Laschentypen hat die Anmelderin im Patent EP 0 803 032 B1 bzw. US 5,980,409 A eine weitergehende Lösung vorgeschlagen. Hier wird für beide Typen vorgeschlagen, dass bei jeweils zwei im Laschenstrang aufeinander folgenden Laschen die eine Lasche mit einem sich parallel zur Verschwenkebene erstreckenden, kreisbogenförmigen Führungsbereich in einen Freiraum hinter einen vorstehenden Haltevorsprung der anderen Lasche eingreift. Der Eingriff des Führungsbereichs der einen Lasche hinter den Haltevorsprung an der anderen Lasche führt zu höherer Seitenstabilität.

Dieser (als nächstliegend betrachtete) Stand der Technik zur Steigerung der Seitenstabilität gattungsgemäßer Energieführungsketten gemäß EP 0 803 032 B1 hat sich bewährt. Er bringt jedoch einige Einschränkungen der Laschengestaltung mit sich, insbesondere hinsichtlich der konstruktiven Gestaltungsfreiheit der zur Begrenzung des Schwenkwinkels notwendigen Anschläge und/oder der Dimensionierung des Zapfens bzw. der Aufnahme für das Schwenkgelenk. Für den Zusammenbau eines Laschenstrangs müssen nämlich - zwecks Einführen des Führungsbereichs in die fast über 180° laufende Führungsnut - die Laschen mit einer schrägen Steckrichtung zusammengefügt werden. Ein spielfreies Eingreifen hinter dem Haltevorsprung bedingt jedoch einen relativ spitzen bzw. sehr kleinen Einführwinkel der Lasche mit Führungsbereich in die Lasche mit Haltevorsprung. Dieser spitze Steck- bzw. Einführwinkel erlaubt wiederum keine beliebige Position der Anschläge zur Schwenkwinkelbegrenzung am Überlappungsbereich und schränkt die Dimensionierung des ebenfalls seitlich vorstehenden Schwenkzapfens ein.

Zur Kompensation schlägt EP 0 803 032 B1 bereits vor, abgeschrägte Kanten bzw. Einführschrägen vorzusehen, u.a. am Gelenkbolzen, am Haltevorsprung und an Teilabschnitten des Führungsbereichs, durch welche der Einführwinkel geringfügig vergrößert werden kann. Dies ist nur bedingt zufriedenstellend. Es erlaubt weiterhin keine weitgehend freie Anordnung und Anzahl der Anschlagvorsprünge bzw. entsprechender Ausnehmungen an den Überlappungsbereichen. Zudem wird die Komplexität der Laschengeometrie erhöht.

Andererseits erfordert die geometrische Komplexität der Seitenlaschen nach EP 0 803 032 B1, insbesondere das Herstellen einer Führungsnut mit ausreichend geringen Toleranzen, aufwändige Spritzguss-Formwerkzeuge mit beweglichen Teilen, wie Schiebern für die Hinterschnitte usw.. Dies wiederum verteuert die Werkzeuge, macht diese im Betrieb störanfälliger und erfordert außerdem verhältnismäßig lange Taktzeiten in der Spritzgussmaschine.

DE 11 2016 001 315 T5 beschreibt Kunststofflaschen, die sich nur in den beiden Endstellungen der zueinander verschwenkbaren Laschen teilweise hintergreifen können. Damit kann eine zuverlässige Seitenstabilisierung über die gesamte Länge bzw. alle Betriebszustände nicht erzielt werden.

Die Patente EP 2 005 025 B1 bzw. US 7,877,978 B2 beschreiben Laschen aus Metall, insbesondere flächige Blechlaschen, mit einem durch Verformen z.B. durch Tiefziehen hergestellten Vorsprung, hinter welchen die nächste Lasche eingreift. Die Gestaltung und Herstellung von Blechlaschen lässt sich jedoch nicht ohne Weiteres auf Kunststofflaschen anwenden.

Eine erste Aufgabe der vorliegenden Erfindung liegt mithin darin, gattungsgemäße Energieführungsketten bzw. Kettenlaschen, insbesondere aus Kunststoff, mit Seitenstabilisierungsfunktion dahingehend weiterzubilden, dass die Gestaltungsfreiheit, insbesondere hinsichtlich der Schwenkwinkelanschläge und/oder Schwenkgelenkverbindungen, verbessert wird. Vorzugsweise soll zugleich eine Bauweise der Kettenlasche vorgeschlagen werden, welche die Herstellung in einem gegenüber dem Stand der Technik vereinfachten Formwerkzeug ermöglicht, d.h. die Herstellungskosten senkt.

Erfindungsgemäß wird dies bereits dadurch erreicht, dass der Haltevorsprung im Vergleich zum Stand der Technik eine deutlich kürzere Abmessung in Schwenkrichtung hat, insbesondere bezogen auf die Abmessung des kreisbogenförmigen Führungsbereichs in Umfangsrichtung, zumindest bezogen auf dessen über den gesamten Verschwenkwinkel wirksame bzw. in Eingriff gelangende Abmessung. Durch einen in Umfangsrichtung um den Kreisbogen der Schwenkbewegung spürbar kürzer dimensionierten bzw. erstreckten Haltevorsprung wird nämlich erreicht, dass die eingreifende Lasche in einem deutlich größeren Winkel zur Laschenebene der haltenden Lasche hinter deren Haltevorsprung eingefügt werden kann. Dies wiederum erhöht die Gestaltungsfreiheit u.a. hinsichtlich Baugröße und/oder Anordnung von an den Überlappungsbereichen vorstehenden Funktionsbestandteilen, insbesondere hinsichtlich Anzahl und Dimensionierung der Anschlagvorsprünge und/oder Dimensionierung des Schwenkzapfens.

Erfindungsgemäß kann also die erste Aufgabe bereits dadurch gelöst werden, dass jeder Haltevorsprung in Umfangsrichtung um die Schwenkachse begrenzt dimensioniert ist, sodass der kreisbogenförmige Führungsbereich einer eingreifenden Lasche, insbesondere bezogen auf seine wirksame Umfangsabmessung und in jeder Schwenkstellung, überwiegend nicht vom Haltevorsprung übergriffen ist, dies insbesondere ungeachtet der bzw. in jeder Schwenkstellung. Geometrischer definiert kann dies erreicht werden, wenn jeder Haltevorsprung in Umfangsrichtung bezogen auf die relative Schwenkbewegung bzw. um die benachbarte Schwenkachse begrenzt dimensioniert ist, sodass der kreisbogenförmige Führungsbereich der angrenzenden bzw. eingreifenden Lasche über einen überwiegenden Anteil der Bogenlänge bzw. Winkelweite des kreisbogenförmigen Führungsbereichs nicht vom Haltevorsprung übergriffen ist. Dies soll unabhängig von der betrachteten Schwenkstellung bzw. in jeder relativen Schwenkstellung beider Laschen zueinander gelten, um das Zusammenfügen aus unterschiedlichen Richtungen zu erleichtern. Hierbei kann insbesondere vorgesehen sein, dass in Summe aller Anteile betrachtet mindestens zwei Drittel oder mehr des kreisbogenförmigen Führungsbereichs aufgrund der umfangsbegrenzten Dimensionierung des Haltevorsprungs jeweils nicht von diesem übergriffen sind. Als Bogenlänge des in der Schwenkebene im Wesentlichen kreisbogenförmig gestalteten Führungsbereichs wird dabei mindestens die über den gesamten Weg der zulässigen Relativschwenkbewegung wirksame bzw. in Eingriff gelangende Bogenlänge verstanden, welche von der Schwenkwinkelbegrenzung abhängt. Bei einer üblichen darüber hinaus weitergehenden Kreisbogenform des Führungsbereichs wird insbesondere auch deren gesamte Bogenlänge betrachtet (entsprechend dem größten vorgesehenen Schwenkwinkel bzw. kleinsten Umlenkbogen), stets bezogen auf die zugehörige Schwenkachse, d.h. den Mittelpunkt der Kreisbogenform.

Es wird dabei insbesondere die Bogenlänge am Stirnende des Führungsbereichs betrachtet. Bei Winkelbetrachtung ist die Lage des betrachteten Bogens unbeachtlich. Gleichwertig ausgedrückt kann also im Sinne der Erfindung die erste Aufgabe bereits dadurch gelöst werden, dass jeder Haltevorsprung in Umfangsrichtung bezogen auf die relative Schwenkbewegung derart begrenzt ist, dass der kreisbogenförmige Führungsbereich der eingreifenden Lasche stets über einen überwiegenden Anteil der Winkelweite des kreisbogenförmigen Führungsbereichs nicht vom Haltevorsprung übergriffen ist bzw. seitlich nach außen frei liegt.

Im Umkehrschluss kann die Aufgabe also bereits dadurch gelöst werden, dass der Haltevorsprung in Umfangsrichtung bezogen auf die Schwenkachse so begrenzt ist, dass der kreisbogenförmige Führungsbereich in jeder Schwenkstellung lediglich über einen vergleichsweise kleinen Längenanteil seiner Bogenlänge bzw. einen kleinen Winkelanteil seiner Winkelweite, beispielsweise weniger als ein Drittel, vom Haltevorsprung überlagert ist. Kurz gesagt, der Haltevorsprung hat in dieser Umfangsrichtung eine vergleichsweise kurze eingriffswirksame Baulänge. Diese kann dabei auf das zur Seitenstabilität nötige Maß minimiert sein. Die eingriffswirksame Bogenlänge bzw. Winkelweite des Haltevorsprungs kann insbesondere in jeder relativen Schwenkstellung der Laschen einen gleichbleibend geringen Anteil der Bogenlänge bzw. Winkelweite des Führungsbereichs, vorzugsweise < 1/3 bzw. 33%, darstellen.

Gemäß einem weiteren unabhängigen Lösungsansatz wird die Aufgabe, unabhängig von der Dimensionierung des Führungsbereichs bereits dadurch gelöst, dass alle bzw. jeder zur Seitenstabilisierung dienende Haltevorsprung der Lasche so dimensioniert sind/ist, dass diese ausschließlich innerhalb eines von der Längsmittelebene der Lasche halbierten Winkelbereichs α < 60°, vorzugsweise ≤ 45°, um die benachbarte Schwenkachse (d.h. mit Winkel-Scheitelpunkt auf dieser Schwenkachse) angeordnet sind/ist. Die benachbarte Schwenkachse bezeichnet dabei die Schwenkachse desjenigen Überlappungsbereichs, über bzw. in dem der jeweiligen Haltevorsprung vorsteht. Die Längsmittelebene der Lasche bezeichnet vorliegend, ungeachtet einer mittigen Lage, eine Ebene welche beide Schwenkachsen der betrachteten Lasche enthält bzw. durch diese Schwenkachsen definiert ist und in Längsrichtung verläuft. Die Höhen-Mittelebene bezeichnet nachfolgend die Mittelebene der Lasche senkrecht zur ihrer Längsrichtung.

Die Erleichterung der Montage bzw. freiere Gestaltung vermeidet diese Anordnung indem jegliche Haltevorsprünge oder Teilbereiche solcher außerhalb des vorgenannnten Winkelbereichs, an der Lasche vorgesehen werden. Diese gilt insbesondere für beide Seiten einer gekröpften Lasche bzw. beide Überlappungsbereiche einer Innen-/Außenlasche.

Der Haltevorsprung übergreift also nicht, wie noch mit den bevorzugten Beispielen aus EP 0 803 032 B1 vorgeschlagen, einen überwiegenden Anteil der Bogenlänge des Führungsbereichs, sondern stets lediglich einen vergleichsweise geringfügigen Anteil. Der Haltevorsprung kann dabei insbesondere räumlich beschränkt auf den mittleren Teilbereich bzw. Höhenabschnitt der Laschenhöhe ausgeführt sein.

Bevorzugt wird für jeden seitlich zu haltenden Überlappungsbereich nur genau ein Haltevorsprung vorgesehen, der vorzugsweise mittig zur Laschenhöhe, insbesondere symmetrisch bzgl. der Laschen-Längsmittelebene gestaltet ist. Auch denkbar ist eine Aufteilung mit z.B. zwei kleineren Haltevorsprüngen innerhalb des begrenzten Winkelbereichs α < 60°, vorzugsweise ≤ 45°, um die benachbarte Schwenkachse. Im Übrigen kann der Haltevorsprung unterschiedlichste Formen haben.

Die erfindungsgemäße Gestaltung ist gleichermaßen auf Ketten bzw. Laschen des ersten Typs nach dem Oberbegriff aus Anspruch 1 bzw. 2 oder 3 oder auf Ketten bzw. Laschen des zweiten Typs nach dem Oberbegriff aus Anspruch 4 bzw. 5, insbesondere auf Kunststofflaschen anwendbar. Auf die Seitenstabilisierung bezogene Merkmale wie vorstehend oder indiesen Ansprüchen definiert sind grundsätzlich untereinander austauschbar und einzeln kombinierbar, sowie einzeln als erfindungswesentlich zu sehen.

Ungeachtet des Laschentyps sind z.B. die Überlappungsbereiche typisch über einen mittig angeordneten, etwa auf der halben Teilungslänge des Kettengliedes ausgeprägten Mittelbereich einteilig verbunden. Der Mittelbereich hat typisch gegenüber den Überlappungsbereichen zumindest stellenweise eine größere Wandstärke bzw. Dicke senkrecht zur Schwenkebene. Bevorzugt ist der Haltevorsprung einteilig vom Mittelbereich vorstehend bzw. mit diesem verbunden. Somit kann jeder Haltevorsprung bevorzugt über einen Verbindungsbereich mit einer auch gegenüber dem Haltevorsprung größeren Wandstärke bzw. Dicke mit dem restlichen Körper der Lasche verbunden sein.

Eine erfindungsgemäße Lasche ist entweder eine Innenlasche bzw. Außenlasche (erster Typ) oder aber eine gekröpfte Lasche (zweiter Typ), und wird besonders bevorzugt aus Kunststoff im Spritzguss hergestellt, insbesondere einstückig bzw. aus einem Guss. Der Begriff Kunststofflaschen bezeichnet vorliegend Laschen, die zumindest überwiegend oder vollständig aus Kunststoff hergestellt sind, insbesondere in einem Verfahren zum Urformen aus dem plastischen Zustand (vgl. DIN 8580), vorzugsweise durch Spritzgießen.

Bei Laschen des ersten Typs werden Haltevorsprünge bevorzugt zumindest an der Außenseite der Innenlasche vorgesehen, in welche Führungsbereiche der überlappenden Außenlaschen eingreifen. Eine Seitenstabilisierung der Endbereiche der Innenlaschen hingegen kann bereits durch geeignete Querstege bzw. Öffnungsstege an den Außenlaschen erzielt werden, **d.h.** weitere Haltevorsprünge an den Außenlaschen sind nur bedingt vorteilhaft. Haltevorsprünge in der hier vorgeschlagenen Anordnung können aber ergänzend oder alternativ auch an der Innenseite der Außenlasche vorgesehen sein.

Ein Schwenkzapfen oder eine passende Schwenkzapfenaufnahme zur Bildung der Dreh- bzw. Schwenkgelenkverbindung können, ungeachtet des Laschentyps, gleichwertig wahlweise am inneren oder äußeren Überlappungsbereich vorgesehen sein.

In einer bevorzugten Ausführungsform ist der Haltevorsprung in Umfangsrichtung um die benachbarte bzw. proximale Schwenkachse des eingreifenden Führungsbereichs so begrenzt, dass der kreisbogenförmige Führungsbereich in jeder Schwenkstellung über einen maximalen Winkel um die Schwenkachse überdeckt ist, der < 60°, vorzugsweise ≤ 45°, beträgt. Eine möglichst kleine Winkelweite des Übergriffs erlaubt einen möglichst großen Einführwinkel beim Zusammenbau der Laschen.

Um bei Betrachtung in der Schwenkebene ein möglichst kleines, materialsparendes Verhältnis der übergriffenen bzw. überdeckten zur freiliegenden Bogenfläche des Führungsbereichs zu erzielen, ist es vorteilhaft, wenn die radiale Eingrifftiefe des kreisbogenförmigen Führungsbereichs in den vom Haltevorsprung überdeckten Freiraum vergleichsweise klein ist. Dies kann insbesondere kleiner als 15%, bevorzugt kleiner oder gleich 12,5% des Kreisbogenradius des Führungsbereichs gemessen vom stirnseitigen Rand des Führungsbereichs zur Schwenkachse des Führungsbereichs betragen.

Zusätzlich zur Reduzierung des Hinterschnitts kann eine besonders vorteilhafte Vereinfachung des Formwerkzeugs erzielt werden, wenn jeder Haltevorsprung zumindest teilweise eine Laschenöffnung überdeckt, der sich von der Innenseite des Haltevorsprungs durch einen bzw. den Mittelbereich der Lasche zur abgewandten Seitenfläche der Lasche erstreckt. Wird der Haltevorsprung über einer Öffnung durch die Lasche gebildet, ist kein Schieber zur Herstellung einer Hinterschneidung erforderlich. Ungeachtet dessen kann eine Öffnung durch die Seitenlasche vorteilhaft so gestaltet sein, dass der Einführwinkel weiter vergrößert werden kann, weil die eingreifende Lasche beim Einstecken in den Freiraum hinter dem Haltevorsprung teilweise in die zum Freiraum offene Öffnung hineinragen kann.

Die Bauweise mit dem Haltevorsprung zugeordneter Laschenöffnungen ist besonders vorteilhaft bei einer relativ flach bauenden Innenlasche bzw. Außenlasche. Hierbei wird vorzugsweise vorgesehen, dass zwei voneinander abgewandte Haltevorsprünge eine gemeinsame Laschenöffnung durch den Mittelbereich überdecken. Zur Stabilität können die gegenüberliegenden Haltevorsprünge einstückig mit einer verstärkten Materialbrücke über die Laschenöffnung geformt sein, welche die Laschenöffnung z.B. in Richtung der Laschenhöhe überbrückt. Diese Geometrie lässt sich durch einen zur Öffnung und ggf. der Brücke passend geformten festen Vorsprung in einer Formwerkzeughälfte leicht herstellen. Denkbar ist weiterhin ergänzend oder alternativ, z.B. zur Wahrung der Zugfestigkeit trotz einseitiger Laschenöffnung, wenn eine Materialbrücke in Längsrichtung der Lasche vorgesehen ist und jeder Haltevorsprung sozusagen zweiteilig bzw. mit Unterbrechung z.B. in der Höhenmittelebene der Lasche gestaltet ist.

Eine geeignete Laschenöffnung sollte aus Festigkeitsgründen einen kantenfreien Grundriss in der Laschen-Hauptebene bzw. Verschwenkebene aufweisen. Der Grundriss kann vorzugsweise im Wesentlichen elliptisch, jedenfalls vollständig gerundet ausgeführt sein.

Vorzugsweise ist die Laschenöffnung im Grundriss exakt passend bzw. bündig zum freien Ende des Haltevorsprungs ausgeführt, d.h**.** der dem Überlappungsbereich zugewandte Rand der Laschenöffnung fluchtet jeweils deckungsgleich mit dem vorstehenden Rand des Haltevorsprungs. Dies vermeidet u.a. einen unerwünschten Spalt zum Innenraum.

Die geringe Wirklänge des Haltevorsprungs bietet gegenüber EP 0 803 032 B1 mehr Gestaltungsfreiheit hinsichtlich der Schwenkanschläge bei beiden Laschentypen. In einer Ausführungsform weist z.B. ein Überlappungsbereich mindestens drei, vorzugsweise vier Anschlagvorsprünge auf, die einstückig mit dem Laschenkörper hergestellt sind und die jeweils zwei voneinander abgewandte ebene, vorzugsweise zur Verschwenkebene senkrechte Anschlagflächen bilden. Entsprechend dazu kann der komplementäre Überlappungsbereich mindestens drei, vorzugsweise vier entsprechende Anschlagtaschen zur Aufnahme der Anschlagvorsprünge aufweisen, die z.B. im Laschenkörper als Aussparungen vorgesehen sind und jeweils zwei gegenüberliegende ebene, vorzugsweise zur Verschwenkebene senkrechte Anschlagflächen zur Schwenkwinkelbegrenzung mit einer entsprechenden Anschlagfläche eines Anschlagvorsprungs bilden. Die Anschlagvorsprünge bzw. Anschlagtaschen sind dabei vorzugsweise gleichmäßig bzw. rotationssymmetrisch um die Schwenkachse verteilt. Es ist also insbesondere möglich, Anschlagelemente wie Anschlagvorsprünge und Anschlagtaschen ganz oder teilweise im inneren Teilbereich jedes Überlappungsbereichs anzuordnen, insbesondere im Vierteilkreis bzw. Quadranten um die Schwenkachse, die den Mittelbereich der Lasche bzw. den Haltevorsprung selbst erfasst. Zudem erhöht eine größere Anzahl Anschlagflächen und damit Gesamtfläche auch die Belastbarkeit bzw. freitragende Länge.

In einer Ausführungsform hat jeweils der Überlappungsbereich, welcher mit seinem Führungsbereich in den Freiraum des Haltevorsprungs eingreift, die Anschlagvorsprünge sowie einen einstückig hergestellten Schwenkzapfen. Dabei können die Anschlagvorsprünge und der Schwenkzapfen bzw. die Schwenkaufnahme in Querrichtung seitlich versetzt zum Führungsbereich liegen und/oder entgegengesetzt zum Haltevorsprung aus der Schwenkebene vorstehen.

Zur Vermeidung von Störkanten steht der Haltevorsprung vorzugsweise seitlich nicht über die äußere Fläche der Lasche hervor. Der Haltevorsprung kann dabei seitlich nach außen oder innen an der Kettenlasche angeordnet sein und bevorzugt bündig mit der äußeren Laschenfläche abschließen. Beim ersten Typ werden Haltevorsprünge vorzugsweise zumindest an der Außenseite des Mittelbereichs der Innenlasche angeordnet. Bei gekröpften Laschen kann der Haltevorsprung insbesondere an der Laschen-Innenseite des Mittelbereichs vorgesehen sein.

Vorzugsweise hat der Haltevorsprung eine innere Haltefläche zum Überlappen des Führungsbereichs, welche zumindest überwiegend, insbesondere weitestgehend bzw. vollständig parallel zur Verschwenkebene ausgeführt ist. Die innere Haltefläche kann dank der erfindungsgemäßen Dimensionierung des Haltevorsprungs insbesondere ohne innenseitige Einführschräge ausgeführt werden.

Hinsichtlich günstiger Anordnung und Dimensionierung des Haltevorsprungs sieht eine Weiterbildung vor, dass jeder Haltevorsprung spiegelsymmetrisch zur Laschen-Längsmittelebene ausgeführt ist und/oder jeder Haltevorsprung mittig in Bezug auf die Laschenhöhe angeordnet ist, insbesondere jeweils mit einem gleichen Abstand zu den gegenüberliegenden Schmalseiten der Lasche, beides dient u.a. der Vermeidung von Torsionskräften im Betrieb. Bevorzugt hat jeder Haltevorsprung eine wirksame Höhenabmessung, die vorzugsweise maximal 40% der Laschenhöhe beträgt. Die wirksame Höhenabmessung bezeichnet dabei die Höhe, welche tatsächlich vom passenden Führungsbereich hintergriffen werden kann.

Weiterhin kann beidseitig spiegelsymmetrisch zum Haltevorsprung jeweils ein vorsprungfreier Querwandbereich liegen, der insbesondere im Wesentlichen senkrecht zur Verschwenkebene verläuft und an den Haltevorsprung angrenzt. Jeder Querwandbereich verläuft bevorzugt konkav zur benachbarten Schwenkachse, insbesondere mit zumindest in einem an den Haltevorsprung angrenzenden Abschnitt kreisbogenförmigen Verlauf, mit geringem Spalt zum gegenüberliegenden Führungsbereich der eingreifenden Lasche. Jeder vorsprungfreie Querwandbereich kann jeweils eine Winkelweite in Umfangsrichtung um die benachbarte Schwenkachse aufweisen, die größer oder gleich dem wirksamen Überdeckungswinkel des Haltevorsprungs ist. Im Falle einer Laschen-Öffnung können solche vorsprungfreien Querwandbereiche zur Laschenmitte hin an dieser Öffnung enden.

In einer Ausführungsform hat der zur benachbarten Schwenkachse vorstehende Rand des Haltevorsprungs mindestens einen Teilabschnitt, welcher im Wesentlichen konvex zur Schwenkachse ausgebaucht ist. Eine konvexe Ausbauchung hat den Vorteil, dass für das Zusammenfügen keine exakte Ausrichtung erforderlich ist und dabei maximale Fläche des Übergriffs erzielbar ist. Der mittlere Höhenabschnitt des Randes kann konvex gekrümmt oder auch z.B. geradlinig ausgeführt sein. Der vorstehende Rand sollte in Längsrichtung jeweils nicht weiter überstehen, als es der erzielbare maximale Einführwinkel zulässt.

Weiterhin kann vorgesehen sein, dass der kreisbogenförmige Führungsbereich zum Eingriff hinter den Haltevorsprung ein stirnseitig am Überlappungsbereich vorstehendes Kreisbogensegment ist, das über dessen im Wesentlichen gesamte Bogenlänge bzw. Winkelweite (evtl. ausgenommen Endübergänge) durchgehend gleichbleibenden Querschnitt aufweist. Bevorzugt springt dieser Querschnitt gegenüber der Außenfläche des Überlappungsbereichs zurück bzw. seine kleinste Wandstärke ist gegenüber dem angrenzenden Bereich des Überlappungsbereichs geringer. Weiterhin kann das Kreisbogensegment außenseitig eine ebene Außenfläche und innenseitig eine Einführschräge, vorzugsweise eine zum Stirnende verjüngend zulaufende, insbesondere konische, Innenfläche aufweisen, um den Einführ- bzw. Steckwinkel weiter zu vergrößern. Weiterhin kann das Kreisbogensegment gegenüber dem angrenzenden Teil des Überlappungsbereichs eine geringere Dicke aufweisen, welche nur einen Bruchteil, insbesondere maximal 50% der größten Wandstärke des angrenzenden Teils des Überlappungsbereichs (dort wo dieser keine Materialaussparung aufweist) betragen sollte. Weiterhin können der kreisbogenförmige Führungsbereich und der Schwenkzapfen bzw. die Schwenkaufnahme in Querrichtung seitlich versetzt zueinander an der Lasche angeordnet sein, d.h. parallel zur Schwenkebene gesehen nicht überschneidend.

Grundsätzlich können der Haltevorsprung und/oder der Führungsbereich so angeordnet sein, dass der Führungsbereich im Wesentlichen über den gesamten Bereich des relativen Verschwenkwinkels zweier schwenkbar verbundener Laschen in den Freiraum des Haltevorsprungs eingreift, d.h. in jeder bestimmungsgemäßen Schwenkstellung seitlich vom Haltevorsprung gehalten ist. Dies erlaubt auch eine langlebige seitlich bzw. horizontal freitragende Verwendung der Energiekette.

Besonders vorteilhaft anwendbar sind die vorstehenden Ausführungsformen auf Kettenlaschen für Energieketten, die einstückig aus einem spritzgussfähigen Kunststoff, insbesondere aus faserverstärktem Thermoplast, hergestellt sind.

Die Erfindung betrifft neben einer Energieführungskette des ersten oder zweiten Typs auch die einzelnen Kettenlaschen hierfür sowie deren paarweise Verbindung, jeweils mit der erfindungsgemäßen Seitenstabilisierung.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Diese zeigen rein beispielhaft:
FIG.1A-1C: Ansichten einer Innenlasche einer erfindungsgemäßen ersten Ausführungsform in Seitenansicht von der dem Ketteninneren abgewandten Außenseite (FIG.1A) und von der Innenseite (FIG.1B) sowie in einem Teillängsschnitt (FIG.1C) durch zwei symmetrische Haltevorsprünge nach Schnittlinie C-C aus FIG.1B;
FIG.2A-2B: perspektivische Ansichten einer Außenlasche passend zur Innenlasche nach FIG.1A-1C, von der Außenseite (FIG.2A) und von der Innenseite (FIG.2B);
FIG.3A: eine perspektivische Ansicht eines Laschenpaars mit einer Innenlasche nach FIG.1A-1C und einer Außenlasche nach FIG.2A-2B;
FIG.3B: einen Teillängsschnitt entsprechend FIG.1C, jedoch mit eingefügter Außenlasche wie in FIG.3A gezeigt, zur Veranschaulichung der Seitenstabilisierung durch Hintergreifen des Haltevorsprungs; und
FIG.4: eine schematische Seitenansicht von der Außenseite zu einer gekröpften Lasche gemäß einem zweiten Ausführungsbeispiel.

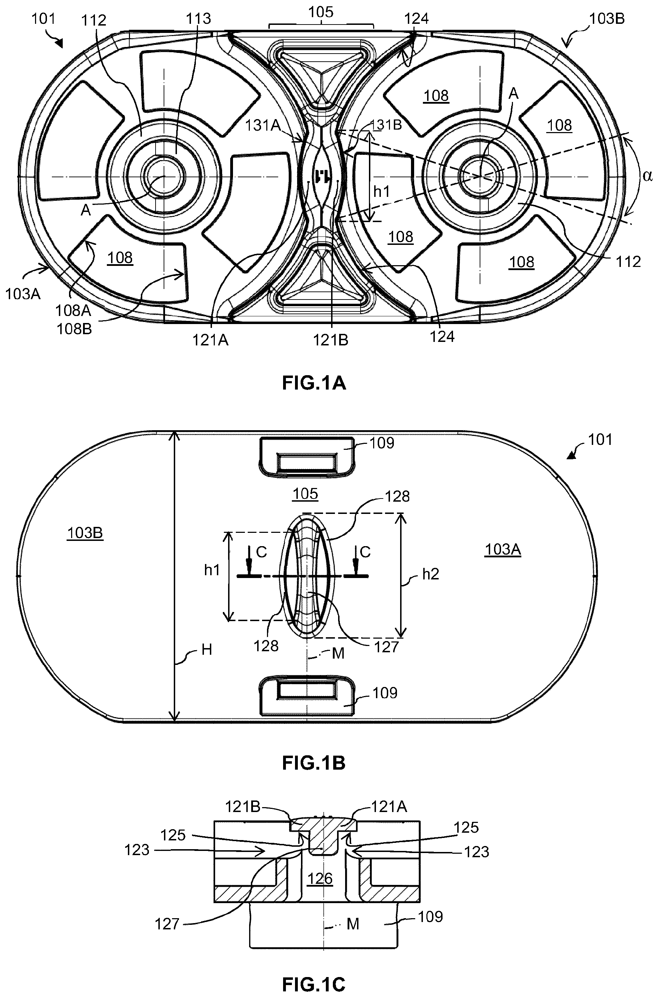

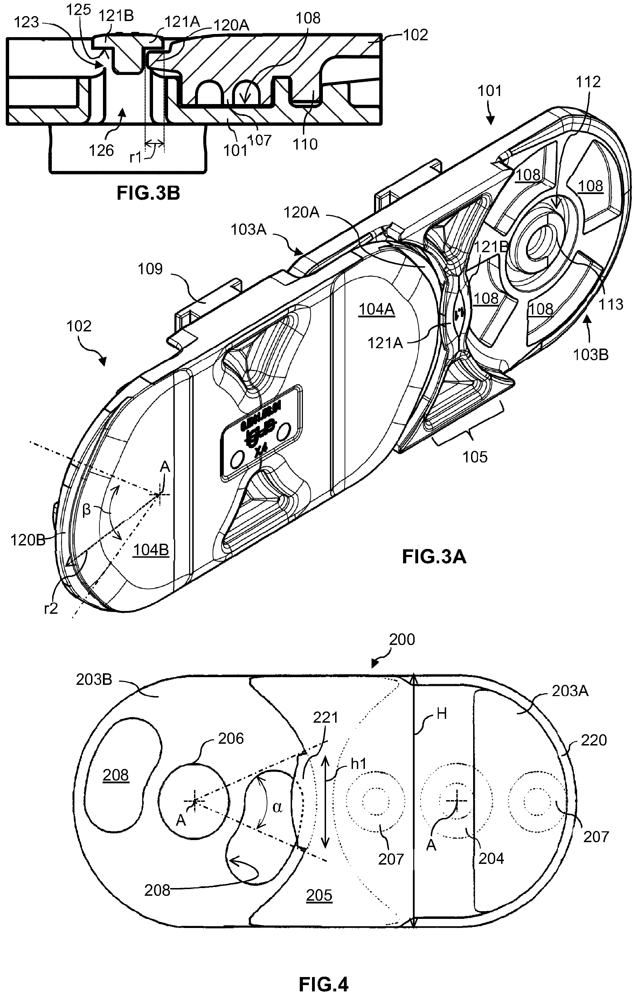

FIG.1A-3A zeigen, in einer ersten Ausführungsform, eine Innenlasche 101 und eine Außenlasche 102 zum Aufbau eines Laschenstrangs (vgl. FIG.3A) einer Energieführungskette durch alternierende Verkettung von Innen- und Außenlaschen 101, 102. Zu an sich bekannten Einzelheiten von Energieführungsketten mit unterschiedlichen Innen- und Außenlaschen wird zur Verkürzung auf WO 98/46906 A1, EP 0 803 032 B1 oder WO 95/04231 A1 verwiesen, deren diesbezügliche Lehre durch Bezugnahme hier einbegriffen ist.

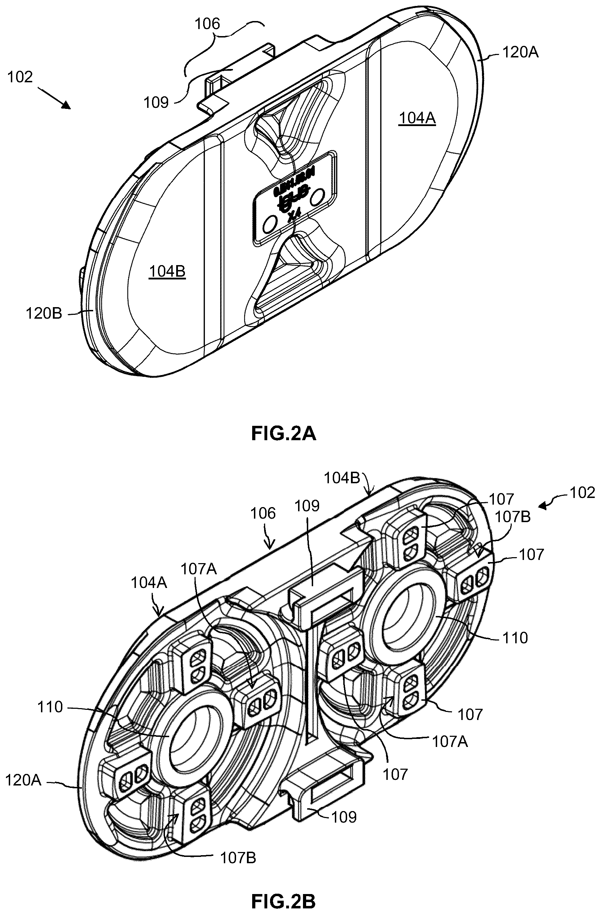

Die Innenlaschen 101 weisen zwei zur Querschnittsebene durch die Laschenmitte (Laschen-Höhenmittelebene M) spiegelsymmetrische Überlappungsbereiche 103A, 103B auf, die zum Inneren der Energieführungskette zugewandt eine geschlossene Fläche bilden (FIG.1B). Die Überlappungsbereiche 103A, 103B wirken mit komplementären, spiegelsymmetrischen Überlappungsbereichen 104A, 104B der Außenlasche 102 (FIG.2A-2B) zusammen. Zwischen den Überlappungsbereichen 103A, 103B bzw. 104A, 104 liegt jeweils ein Mittelbereich 105 bzw. 106 der nach außen bzw. innen vorsteht und bereichsweise eine größere Wandstärke hat.

Zur Bildung einer Gelenkverbindung, mittels welcher die Laschen 101, 102 gelenkig in einer Ebene (Ebene von FIG.1A/1B) jeweils um ihre Schwenkachse A (senkrecht zur Ebene von FIG.1A/1B) verschwenkbar verbunden werden, haben die Außenseiten der Überlappungsbereiche 103A, 103B jeweils eine zentrale Zapfenaufnahme 112 koaxial zur Schwenkachse A, in welche jeweils ein passender zentraler Schwenkzapfen 110 des überlappenden Überlappungsbereichs 104A, 104B einer Außenlasche 102 eingreift. Der Schwenkzapfen 110 ist hier an der Außenlasche 102 in Art einer Hohlwelle materialsparend ausgeführt und steht einstückig zentral von der Innenseite der Überlappungsbereiche 104A, 104B (FIG.2B) vor. So kann ein weiterer Zapfen 113, welcher koaxial in der Zapfenaufnahme 112 vorsteht, in den Hohlraum des Schwenkzapfens 110 eingreifen um die Zugfestigkeit des Gelenks zu steigern. Zu beachten ist insbesondere der vergleichsweise große äußere Durchmesser des Schwenkzapfens 110, der hier z.B. ≥ 35% der Laschenhöhe H beträgt. In an sich bekannter Weise werden Kettenglieder durch Verbinden von zwei gegenüberliegenden Innenlaschen 101 und Außenlaschen 102 mittels Querstegen hergestellt. Dazu werden an Befestigungshörnern 109 baugleiche Querstege (nicht gezeigt) montiert, deren Länge die Innenbreite vorgibt. Die baugleichen Befestigungshörner 109 stehen zur Innenseite vor und befinden sich im Mittelbereich 105 bzw. 106 mittig auf der halben Teilungslänge. Geeignete Querstege sind an ihren Enden vorzugsweise so aufgeweitet, dass jeweils am Mittelbereich 106 der Außenlasche 102 befestigte Querstege die Innenwand des angrenzenden Überlappungsbereichs 103A, 103B der Innenlasche 101 übergreifen.

Zur Begrenzung des Schwenkwinkels bzw. Einstellung des Kettenradius im Umlenkbogen der Energieführungskette (nicht gezeigt) oder einer Vorspannung, sind an der Innenseite der Außenlasche 102 parallel zum Schwenkzapfen 110 vorstehend hier jeweils vier identische Anschlagvorsprünge 107 vorgesehen. Die Anschlagvorsprünge 107 sind mit dem Körper der Außenlasche 102 einstückig hergestellt und rotationssymmetrisch bzw. gleichmäßig um die Schwenkachse A verteilt. Jeder Anschlagvorsprung 107 ist im Querschnitt etwa trapezförmig und bildet an den langen Seiten jeweils zwei erste, überwiegend planebene Anschlagflächen 107A, 107B, die voneinander abgewandt sind. Dazu passend hat jeder der Überlappungsbereiche 103A, 103B der Innenlasche 101 vier zur Schwenkachse A rotationssymmetrische Anschlagtaschen 108 zur Aufnahme der Anschlagvorsprünge 107. Die Anschlagtaschen 108 sind hier im Laschenkörper als Aussparungen bzw. Ausnehmungen an der Außenseite der Überlappungsbereiche 103A, 103B (FIG.1A) der Innenlasche vorgesehen. Jede Anschlagtasche 108 bildet überwiegend ebene Gegenanschlagflächen 108A, 108B für die korrespondierenden Anschlagflächen 107A, 107B am eingreifenden Anschlagvorsprung 107. Der Schwenkwinkelbereich wird u.a. durch die offene Winkelweite um die Schwenkachse A zwischen den gegenüberliegenden Gegenanschlagflächen 108A, 108B bestimmt. Die Gegenanschlagflächen 108A, 108B sind zudem durch Taschenböden stabil verbunden, welche die Anschlagtaschen 108 zur Innenseite schließen (vgl. FIG.1B). Eine Vertauschung mit Anschlagvorsprüngen und Schwenkzapfen an der Innenlasche und entsprechenden Aufnahmen an der Außenlasche wäre prinzipiell gleichwertig.

Zu beachten ist im Vergleich zum nächstliegenden Stand der Technik hier insbesondere, dass in der dem Mittelbereich 105 zugewandten inneren Hälfte jedes Überlappungsbereichs 103A, 103B eine Anschlagtasche 108 vorgesehen ist, in welche auch - wie unten ersichtlich - ein entsprechender Anschlagvorsprung 107 in der inneren Hälfte am Überlappungsbereich 104A, 104B der Außenlasche 102 eingeführt werden kann. Diese Lage ist wegen der Verstärkung durch den Mittelbereich 105, 106 für die Festigkeit vorteilhaft. Eine entsprechende rotationssymmetrische Anschlaganordnung ist auch mit nur drei Anschlagvorsprüngen 107 und den korrespondierenden Anschlagtaschen 108 möglich.

FIG.3A zeigt den zusammengefügten Zustand von zwei Laschen 101, 102. Hierbei ist eine Innenlasche 101 mit einer Außenlasche 102 schwenkbar, anschlagswirksam und kraftübertragend verkettet, sodass der Schwenkzapfen 110 in die Zapfenaufnahme 112 und die Anschlagvorsprünge 107 in die Anschlagtaschen 108 eingreifen. Zur Seitenstabilisierung greift die Außenlasche 102 mit einem von zwei symmetrischen, parallel zur Verschwenkebene erstreckten Führungsbereichen 120A hinter einen Haltevorsprung 121A, der außenseitig am Mittelbereich 105 vorgesehen ist. Am Mittelbereich 105 der Innenlasche 101 sind spiegelsymmetrisch zur Laschen-Höhenmittelebene zwei gleichartige Haltevorsprünge 121A, 121B vorgesehen, jeweils für einen Führungsbereich 120A bzw. 120B von zwei mit dieser Innenlasche 101 verbundenen Außenlaschen 102. Die Haltevorsprünge 121A, 121B sind im Wesentlichen parallel zur Schwenkebene angeordnet und springen in Richtung der jeweils benachbarten Schwenkachse vom Mittelbereich 105 hervor. FIG.3A zeigt die gestreckte Relativstellung beider Laschen 101, 102, der Hintergriff des Führungsbereichs 120A bleibt jedoch flächenmäßig gleich über den gesamten Schwenkbereich bis hin zur vollständig verschwenkten Relativstellung (nicht gezeigt). Die Führungsbereiche 120A, 120B sind jeweils Kreisbogensegmente um die Schwenkachse A und bilden einen stirnseitigen äußeren Endbereich des jeweiligen Überlappungsbereichs 104A, 104B der Außenlasche 102, welcher an den Mittelbereich 105 der Innenlasche 101 angrenzt. Jeder der endseitigen Führungsbereiche 120A, 120B hat in Seitenansicht die Form eines Kreisbogensegments und ist mit im Wesentlichen durchgehend gleichbleibendem Querschnitt ausgeführt, wobei innenseitige Einführschrägen im mittleren Bereich (vgl. FIG.2B) möglich sind. Wie FIG.3B veranschaulicht, springt jeder Führungsbereich 120A, 120B im Querschnitt gegenüber der Außenfläche der Lasche 102, insbesondere gegenüber dem angrenzenden Querschnitt des Überlappungsbereichs 104A, 104B stufenförmig zurück, ggf. mit einem schrägen oder gerundetem Übergang (vgl. FIG.2A).

Jeder Haltevorsprung 121A, 121B ist zur Längs- und Höhenmittelebene der Innenlasche 101 symmetrisch und erstreckt sich räumlich beschränkt auf einen mittleren Höhenabschnitt der Laschenhöhe H, mit einer zum Eingriff nutzbaren bzw. wirksamen Höhenabmessung h1 (vgl. FIG.1B), wobei das Verhältnis h1/H bevorzugt <40%, hier z.B. ca. 30%, beträgt. Weiterhin ist jeder Haltevorsprung 121A, 121B auch in Umfangsrichtung bzw. Schwenkrichtung um die Schwenkachse A betrachtet begrenzt dimensioniert. Diese Dimensionierung des Haltevorsprungs 121A, 121B ist so gewählt, dass der eingreifende, kreisbogenförmige Führungsbereich 120A, 120B stets lediglich über einen kleineren Anteil, z.B. <40% besonders bevorzugt ≤33%, seiner Bogenlänge bzw. Winkelweite vom Haltevorsprung 121A, 121B übergriffen ist (vgl. FIG.3B). In FIG.1A (rechts) ist beispielhaft die vergleichsweise kleine wirksame Winkelweite α, hier ca. 30°, des Haltevorsprungs 121A, 121B veranschaulicht. Die Winkelweite α bezeichnet dabei den Winkel eines Strahls durch den Anfangspunkt des Eingriffs unter den Haltevorsprung 121A, 121B und eines Strahls durch den entsprechenden Endpunkt, mit der Schwenkachse A als Scheitelpunkt des Winkels. Entsprechend betrachtet ist der Führungsbereich 120A, 120B stets bezogen auf seine insgesamt nutzbare Bogenlänge bzw. Winkelweite β, hier ca. 90°, mit einem überwiegenden Anteil (β-α) nicht vom zugeordneten Haltevorsprung 121A, 121B übergriffen, wie aus FIG.3A beispielhaft für die Strecklage ersichtlich. Die nutzbare Winkelweite β der Führungsbereiche 120A, 120B ist vom gewünschten Schwenkbereich der Laschen zueinander bzw. Krümmungsradius der Energieführungskette abhängig und liegt typisch zwischen ca. 90° bis ca. 150° und ggf. bis fast 180°. Der Haltevorsprung 121A, 121B ist in Umfangsrichtung vorzugsweise auf eine maximal hintergreifbare Winkelweite α ≤ 45° beschränkt.

Wie ein Vergleich der vergrößerten Teilquerschnitte in FIG.1C (nur Innenlasche 101) und FIG.3B (Innenlasche 101 und Außenlasche 102 zusammengefügt) am besten verdeutlicht, greift der Führungsbereich 120A bzw. 120B stets mit geringfügigem Bewegungsspiel quer zur Schwenkebene in einen Freiraum 123 hinter den jeweiligen Haltevorsprung 121A bzw. 121B. Hierin wird der Führungsbereich 120A bzw. 120B bei Querbelastung in seitlicher Richtung durch eine ebene Innenfläche 125 an der dem Ketteninneren zugewandten Rückseite des Haltevorsprungs 121A, 121B anschlagen bzw. gehalten. Die Innenflächen 125 verlaufen parallel zur Schwenkebene. Dementsprechend ist die äußere Flanke der Führungsbereiche 120A, 120B jeweils eben und parallel zur Schwenkebene, d.h. entsprechend einem Sektor einer Kreisscheibe ausgeführt.

Wie FIG.3B zeigt, ist dabei die radiale Eingrifftiefe r1 (FIG.3B) des Führungsbereichs 120A, 120B in den vom Haltevorsprung 121A, 121B überdeckten Freiraum 123 möglichst klein, aber für die gewünschte Seitenstabilität ausreichend gewählt. Durch geeignet geringen Überstand des Haltevorsprungs 121, 121B (FIG.3B) ist die maximale Eingrifftiefe r1 in der Laschen-Längsmittelebene (vgl. Schnittebene C-C in FIG.1B) z.B. ≤ 15%, bevorzugt ≤ 12,5% des Kreisbogenradius r2 (FIG.3A) des Führungsbereichs 120A, 120B eingestellt.

FIG.1C und FIG.3B zeigen weiterhin eine durch den Mittelbereich 105 der Innenlasche 101 erstreckte Laschenöffnung 126, welche jeder Haltevorsprung 121A, 121B zumindest seitlich überdeckt. Die Laschenöffnung 126 erstreckt sich senkrecht zur Schwenkebene bzw. parallel zur Schwenkachse A bis zur abgewandten Seitenfläche der Innenlasche 101, wie FIG.1B zeigt, und mündet dort ggf. unter Aufweitung. Im gezeigten Ausführungsbeispiel überdecken beide Haltevorsprünge 121A, 121B seitlich eine zusammenhängende bzw. gemeinsame Laschenöffnung 126 durch den Mittelbereich 105. Die Laschenöffnung 126 geht offen in die Freiräume 123 über bzw. umfasst diese. Dementsprechend kann beim Montieren der Führungsbereich 120A, 120B jeweils schräg geringfügig in die Laschenöffnung 126 hineinragen. Wie FIG.1A-1C zeigen, hat die Laschenöffnung 126 einen kantenfreien, hier im Wesentlichen elliptischen Grundriss in der Laschenhauptebene (FIG.1B). Der dem Überlappungsbereich zugewandte Rand 128 der Laschenöffnung 126 fluchtet jeweils beidseitig deckungsgleich mit dem vorstehenden Rand 131A, 131B des Haltevorsprungs 121A, 121B. Die sacklochartige Laschenöffnung 126 erlaubt eine vereinfachte Herstellung der Innenlasche 101, insbesondere der Haltevorsprünge 121A, 121B, mit einfachen Spritzguss-Formwerkzeugen ohne Schieber. Hierzu ist lediglich eine zur Laschenöffnung 126 konjugierte Positivform als feststehender Vorsprung in einer Formhälfte erforderlich, deren Formgebung die Rückseite der Haltevorsprünge 121A, 121B, insbesondere die inneren Halteflächen 125 definiert. Dabei wird vorzugsweise einstückig zwischen den Halteflächen 125 bzw. am Stirnende der Laschenöffnung 126 eine verstärkte Materialbrücke 127 mitgeformt, von welcher die Haltevorsprünge 121A, 121B seitlich abstehen. Im gezeigten Ausführungsbeispiel überbrückt die Materialbrücke 127 die Laschenöffnung 126 in Richtung der Laschenhöhe H und dient zur Verstärkung der Haltevorsprünge 121A, 121B gegen Querkräfte. Aufgrund der Materialbrücke 127 sind die Haltevorsprünge 121A, 121B mittels einem Bereich vergleichsweise größerer Materialstärke mit dem Rest der Lasche verbunden.

Wie FIG.1A zeigt, bildet der Mittelbereich 105 der Innenlasche jeweils spiegelsymmetrisch zur Laschen-Längsmittelebene (vgl. C-C in FIG.1B) und Laschen-Höhenmittelebene M zwei vorsprungfreie Querwandbereiche 124 in Kreisbogenform um die Schwenkachse. Jeder Haltevorsprung 121A, 121B endet jeweils beidseitig in einem Übergang zu einem entsprechenden vorsprungfreien Querwandbereich 124, dessen Winkelweite vorzugsweise größer ist als die des jeweiligen Haltevorsprungs 121A, 121B. Jeder Querwandbereich 124 reicht dabei vom Haltevorsprung 121A, 121B jeweils bis fast zur entsprechenden Schmalseite der Innenlasche 101. Die stirnseitigen Querwandbereiche 124 des Mittelbereichs 105 stehen senkrecht zur Laschenhauptebene und gehen ggf. mit einem gerundeten bzw. kantenfreien Übergang in die Überlappungsbereiche 103A, 103B über.

Wie FIG.1A weiter veranschaulicht, ist der jeweils zur benachbarten Schwenkachse A vorstehende Rand 131A, 131B des Haltevorsprungs 121A, 121B konvex zur Schwenkachse A hin ausgebaucht, entsprechend deckungsgleich mit dem Grundriss der Laschenöffnung 126.

FIG.4 zeigt, als weiteres Ausführungsbeispiel, in Seitenansicht ganz schematisch eine gekröpfte Kettenlasche 200, die einteilig aus Kunststoff in Spritzgusstechnik hergestellt ist. Der nach außen gekröpfte Überlappungsbereich 203A hat an seiner Innenseite einen einstückig mit der Kettenlasche 200 geformten Gelenkzapfen 204, zum Eingriff (senkrecht zur Ebene in FIG.4) in eine Gelenkaufnahme 206 im nach innen gekröpften Überlappungsbereich 203B einer angrenzenden baugleichen Kettenlasche, zur Bildung eines Schwenkgelenks um die jeweilige Schwenkachse A**.** Der Überlappungsbereich 203A hat weiterhin an seiner Innenseite zwei einteilig vorstehende, hier zylindrische Anschlagvorsprünge 207, welche diametral zur Schwenkachse A gegenüberliegend auf der Laschen-Längsmittelebene angeordnet sind. Die Anschlagvorsprünge 207 greifen zur Schwenkwinkelbegrenzung in zwei entsprechende bogenförmige Ausnehmungen 208 an der Außenseite des Überlappungsbereichs 203B einer angrenzenden Kettenlasche 200. Bemerkenswert ist vorliegend die Anordnung jeweils eines Anschlagvorsprungs 207 und einer korrespondierenden Ausnehmung 208 in der inneren Hälfte der Überlappungsbereiche 203A, 203B in unmittelbarer Nähe zum verstärkten Mittelbereich 205. Dies wird ermöglicht durch erfindungsgemäße Dimensionierung eines zur Seitenstabilisierung vorgesehenen Haltevorsprungs 221. Der Haltevorsprung 221 am Mittelbereich 205 bildet hier eine kreisbogenförmige Nut für den Eingriff eines sich parallel zur Verschwenkebene erstreckenden Führungsbereichs 220 am stirnseitigen Ende des Überlappungsbereichs 203A einer angrenzenden baugleichen Lasche. Der Führungsbereich 220 ist in FIG.4 beispielhaft als über 180° umlaufendes, vorspringendes Kreissegment ausgeführt und hat zumindest relativ zur größeren Wandstärke des Mittelbereichs 205 eine geringere Wandstärke.

Der Haltevorsprung 221 zur Seitenstabilisierung steht einstückig vom Mittelbereich 205 vor und ist in Umfangsrichtung um die Schwenkachse ebenfalls begrenzt dimensioniert, z.B. mit im Vergleich zum Führungsbereich 220 erheblich kleinerer Winkelweite α und auf einen nur kleinen mittleren Anteil h1 der Laschenhöhe H erstreckt. Somit wird auch hier, analog zu FIG.1A-3B, der kreisbogenförmige Führungsbereich 220 überwiegend nicht vom Haltevorsprung 221 übergriffen. Dies erlaubt u.a. einen größeren Einführwinkel beim Zusammenfügen zweier gekröpfter Kettenlaschen 200 nach FIG.4, wodurch wiederum größere Gestaltungsfreiheit hinsichtlich Lage und Dimensionierung, insbesondere der Anschlagvorsprünge 207 und zugehöriger Ausnehmungen 208, ermöglicht wird. Bezüglich sonstiger an sich bekannter Merkmale gekröpfter Laschen wird hier beispielhaft die Lehre aus DE 3 531 066 C2 einbezogen.

Trotz räumlich begrenzter und materialsparender Dimensionierung erzielen erfindungsgemäße Haltevorsprünge 121A, 121B bzw. 221 eine hohe Stabilität gegen Kippen, Aufbiegen oder Ausbrechen verbundener Laschen aus der Schwenkebene.

### Bezugszeichenliste

**FIG.1A-3A**
   101 Innenlasche
   102 Außenlasche
   103A, 103B Überlappungsbereich (Innenlasche)
   104A, 104B Überlappungsbereich (Außenlasche)
   105 Mittelbereich (Innenlasche)
   106 Mittelbereich (Außenlasche)
   107 Anschlagvorsprung
   107A, 107B Anschlagflächen
   108 Anschlagtasche
   108A, 108B Gegenanschlagflächen
   109 Befestigungshorn (für Quersteg)
   110 Schwenkzapfen
   112 Zapfenaufnahme (Schwenkzapfen)
   120A, 120B Führungsbereich
   121A, 121B Haltevorsprung
   123 Freiraum
   124 Querwandbereich
   125 innere Haltefläche
   126 Laschenöffnung
   127 Materialbrücke
   128 Rand (Laschenöffnung)
   131A, 131B konvexer Rand (Haltevorsprung)
   α Winkelweite (Haltevorsprung: FIG.1A)
   β nutzbare Winkelweite (Führungsbereich: FIG.3A)
   A Schwenkachse
   H Laschenhöhe
   h1 wirksame Höhenabmessung
   M Laschen-Höhenmittelebene
   r1 radiale Eingrifftiefe (FIG.3B) r2 Kreisbogenradius (Führungsbereich: FIG.3A)
**FIG.4**
   200 gekröpfte Kettenlasche
   203A, 203B Überlappungsbereich
   204 Gelenkzapfen
   205 Mittelbereich
   206 Gelenkaufnahme
   207 Anschlagvorsprung
   208 Ausnehmung
   220 Führungsbereich
   221 Haltevorsprung
   α Winkelweite (Haltevorsprung)
   A Schwenkachse
   H Laschenhöhe
   h1 wirksame Höhenabmessung

## Patentansprüche

1. Energieführungskette zur Führung von Leitungen, wie Schläuchen, Kabeln oder dgl., zwischen zwei Anschlussstellen, mittels Kettengliedern, die jeweils zwei gegenüberliegende Laschen, insbesondere aus Kunststoff, umfassen, die über mindestens einen Quersteg miteinander verbunden sind, wobei die Energieführungskette zwei Laschenstränge jeweils mit alternierend aufeinanderfolgenden Innenlaschen (101) und Außenlaschen (102) aufweist, wobei die Innenlaschen dem Ketteninneren zugewandte innere Überlappungsbereiche (103A, 103B) und die Außenlaschen äußere Überlappungsbereiche (104A, 104B) aufweisen, mit denen benachbarte Laschen jeweils überlappen und gelenkig in einer Ebene um eine Schwenkachse (A) verschwenkbar miteinander verbunden sind, wobei von jeweils zwei im Laschenstrang benachbarten Laschen, die eine Lasche (102) mit einem sich parallel zur Verschwenkebene erstreckenden, kreisbogenförmigen Führungsbereich (120A, 120B) in einen Freiraum (123) hinter einen Haltevorsprung (121A, 121B) zur Seitenstabilisierung an der anderen Lasche eingreift,
**dadurch gekennzeichnet, dass**
der Haltevorsprung (121A, 121B) räumlich beschränkt auf einen mittleren Höhenabschnitt (h1) der Laschenhöhe und in Umfangsrichtung um die Schwenkachse (A) begrenzt dimensioniert ist, sodass der kreisbogenförmige Führungsbereich (120A, 120B) lediglich über einen kleineren Anteil, bevorzugt ≤33%, seiner Bogenlänge bzw. Winkelweite (α) vom Haltevorsprung (121A, 121B) übergriffen ist und über einen überwiegenden Anteil, insbesondere ≥66%, seiner Bogenlänge bzw. Winkelweite (β-α) nicht vom Haltevorsprung (121A, 121B) übergriffen ist.

2. Kunststofflasche, vorzugsweise Innenlasche (101) für eine Energieführungskette nach Anspruch 1, umfassend zwei gegenüberliegende Überlappungsbereiche (103A; 103B) und einen dazwischenliegenden Mittelbereich (105), wobei jeder Überlappungsbereich entweder einen mit diesem einstückigen Schwenkzapfen oder eine in diesem geformte Zapfenaufnahme (112) aufweist, um überlappende Laschen (101; 102) in einer Ebene um eine Schwenkachse (A) verschwenkbar miteinander zu verbinden, und wobei einstückig am Mittelbereich (105) jeweils zwei Haltevorsprünge (121A, 121B) vorgesehen sind und jeder Haltevorsprung über einen zugehörigen Freiraum (123) vorspringt, in welchen eine angrenzende Außen- oder Innenlasche (101; 102) mit einem sich parallel zur Verschwenkebene erstreckenden, kreisbogenförmigen Führungsbereich (120A, 120B) zur Seitenstabilisierung eingreifen kann
**dadurch gekennzeichnet, dass**
jeder Haltevorsprung (121A, 121B) in Umfangsrichtung um die Schwenkachse (A) begrenzt (α) dimensioniert ist, sodass der kreisbogenförmige Führungsbereich einer eingreifenden Lasche überwiegend nicht vom Haltevorsprung übergriffen ist; und/oder **dass** jeder Haltevorsprung (121A, 121B) innerhalb eines von der Längsmittelebene der Lasche halbierten Winkelbereichs α < 60°, vorzugsweise ≤ 45°, um die benachbarte Schwenkachse (A) angeordnet ist.

3. Laschenpaar für eine Energieführungskette nach Anspruch 1, umfassend eine Innenlasche (101) und eine Außenlasche (102), wobei jede Lasche zwei gegenüberliegende Überlappungsbereiche (103A, 103B; 104A, 104B) und einen dazwischenliegenden Mittelbereich (105; 106) aufweist und beide Laschen zum einseitigen Überlappen mit ihren Überlappungsbereichen ausgeführt sind; die Außenlasche (102) in jedem Überlappungsbereich (104A, 104B) einen mit diesem einstückigen Schwenkzapfen (110) aufweist und die Innenlasche (101) in jedem Überlappungsbereich (103A, 103B) eine entsprechende in diesem geformte Zapfenaufnahme (112) aufweist, um beide Laschen in einer Ebene schwenkbar miteinander zu verbinden; und
wobei einstückig am Mittelbereich (105) der Innenlasche jeweils zwei Haltevorsprünge (121A, 121B) zur Seitenstabilisierung vorgesehen sind und jeder Haltevorsprung über einen zugehörigen Freiraum (123) vorspringt;
wobei einstückig an jedem Überlappungsbereich (104A, 104B) der Außenlasche (102) stirnseitig ein parallel zur Verschwenkebene erstreckter, kreisbogenförmiger Führungsbereich (120A, 120B) zur Seitenstabilisierung vorgesehen ist und in den Freiraum (123) eines Haltevorsprungs eingreifen kann;
**dadurch gekennzeichnet, dass**
jeder Haltevorsprung (121A, 121B) am Mittelbereich (105) der Innenlasche in Umfangsrichtung um die Schwenkachse (A) begrenzt dimensioniert (α) ist, sodass der kreisbogenförmige Führungsbereich (120A, 120B) der eingreifenden Außenlasche (102) überwiegend nicht vom Haltevorsprung (121A, 121B) übergriffen ist und/oder **dass** jeder Haltevorsprung (121A, 121B) innerhalb eines von der Längsmittelebene der Lasche halbierten Winkelbereichs α < 60°, vorzugsweise ≤ 45°, um die benachbarte Schwenkachse (A) angeordnet ist.

4. Energieführungskette zur Führung von Leitungen, wie Schläuchen, Kabeln oder dgl., zwischen zwei Anschlussstellen, mittels Kettengliedern, die jeweils zwei gegenüberliegende Laschen aus Kunststoff umfassen, die über mindestens einen Quersteg miteinander verbunden sind, wobei die Energieführungskette zwei Laschenstränge jeweils mit gleichartigen gekröpften Laschen (200) aus Kunststoff aufweist, wobei jede gekröpfte Lasche (200) einen ersten Überlappungsbereich (203B) und einen demgegenüber nach außen gekröpften zweiten Überlappungsbereich (203A) aufweist, mit denen benachbarte Laschen jeweils überlappen und gelenkig in einer Ebene um eine Schwenkachse (A) verschwenkbar miteinander verbunden sind, wobei von jeweils zwei im Laschenstrang benachbarten Laschen die eine Lasche mit einem sich parallel zur Verschwenkebene erstreckenden, kreisbogenförmigen Führungsbereich (220) in einen Freiraum hinter einen Haltevorsprung (221) zur Seitenstabilisierung an der anderen Lasche eingreift, **dadurch gekennzeichnet, dass** der Haltevorsprung (221) räumlich beschränkt auf einen mittleren Höhenabschnitt (h1) der Laschenhöhe und in Umfangsrichtung um die Schwenkachse (A) begrenzt dimensioniert ist, sodass der kreisbogenförmige Führungsbereich (220) lediglich über einen kleineren Anteil (α) seiner Bogenlänge bzw. Winkelweite vom Haltevorsprung (221) übergriffen ist und über einen überwiegenden Anteil seiner Bogenlänge bzw. Winkelweite nicht vom Haltevorsprung (221) übergriffen ist.

5. Gekröpfte Kunststofflasche (200) für eine Energieführungskette nach Anspruch 4, umfassend einen ersten Überlappungsbereich (203B) und einen demgegenüber nach außen gekröpften zweiten Überlappungsbereich (203) und einen dazwischenliegenden Mittelbereich (205) mit zumindest bereichsweise größerer Wandstärke, wobei der eine Überlappungsbereich (203A) einen mit diesem einstückigen Schwenkzapfen (204) und der andere Überlappungsbereich eine entsprechende Aufnahme (206) aufweist, um überlappende Laschen in einer Ebene um eine Schwenkachse (A) verschwenkbar miteinander zu verbinden, und wobei das freie Ende eines Überlappungsbereichs (203A) mindestens einen sich parallel zur Verschwenkebene erstreckenden, kreisbogenförmigen Führungsbereich (220) umfasst, welcher gegenüber der größeren Wandstärke des Mittelbereichs (205) eine geringere Wandstärke aufweist und wobei einstückig am Mittelbereich (205) jeweils mindestens ein Haltevorsprung (221) zur Seitenstabilisierung vorgesehen ist, hinter welchen eine angrenzende Lasche mit ihrem Führungsbereich (220) zur Seitenstabilisierung eingreifen kann; **dadurch gekennzeichnet, dass**
jeder Haltevorsprung (221) in Umfangsrichtung um die Schwenkachse begrenzt (α) dimensioniert ist, sodass der kreisbogenförmige Führungsbereich (220) der angrenzenden Lasche überwiegend nicht vom Haltevorsprung (221) übergriffen ist und und/oder **dass** jeder Haltevorsprung (221) innerhalb eines von der Längsmittelebene der Lasche halbierten Winkelbereichs α < 60°, vorzugsweise ≤ 45°, um die benachbarte Schwenkachse (A) angeordnet ist.

6. Energieführungskette bzw. Kunststofflasche nach einem der Ansprüche 1 bis 5, **dadurch gekennzeichnet, dass** der Haltevorsprung (121A, 121B) in Umfangsrichtung um die Schwenkachse so begrenzt ist, dass der kreisbogenförmige Führungsbereich in jeder Schwenkstellung über einen maximalen Winkel (α) um die Schwenkachse (A) überdeckt ist, der < 60°, vorzugsweise ≤ 45°, beträgt und/oder
der Haltevorsprung (121A, 121B) begrenzt dimensioniert ist, sodass in jeder Schwenkstellung der kreisbogenförmige Führungsbereich (120A, 120B) über einen Anteil <40% der Bogenlänge bzw. Winkelweite des Führungsbereichs (120A, 120B) vom Haltevorsprung (121A, 121B) übergriffen ist und der kreisbogenförmige Führungsbereich (120A, 120B) über einen Anteil ≥60% der Bogenlänge bzw. Winkelweite des Führungsbereichs (120A, 120B) vom Haltevorsprung (121A, 121B) nicht übergriffen (β-α) ist.

7. Energieführungskette bzw. Kunststofflasche nach einem der Ansprüche 1 bis 6, **dadurch gekennzeichnet, dass** die radiale Eingrifftiefe (r1) des Führungsbereichs (120A, 120B) in den vom Haltevorsprung (121A, 121B) überdeckten Freiraum (123) kleiner als 15%, bevorzugt kleiner oder gleich 12,5% des Kreisbogenradius (r2) des Führungsbereichs (120A, 120B) ist und/oder
zur Schwenkwinkelbegrenzung jeder Überlappungsbereich (104A, 104B) mehrere Anschlagelemente, umfassend Anschlagvorsprünge (107; 207) oder Anschlagtaschen (108; 208), aufweist und mindestens ein Anschlagelement ganz oder teilweise im inneren Teilbereich jedes Überlappungsbereichs angeordnet ist, wobei der innere Teilbereich vorzugsweise ein Quadrant um die Schwenkachse ist, der den Mittelbereich (105, 106; 205) der Lasche mit dem Haltevorsprung (121A, 121B; 221) selbst umfasst.

8. Energieführungskette bzw. Kunststofflasche nach einem der Ansprüche 1 bis 7, **dadurch gekennzeichnet, dass**
- jeder Haltevorsprung (121A, 121B) zumindest teilweise eine Laschenöffnung (126) überdeckt, die sich durch einen bzw. den Mittelbereich (105) der Lasche zur abgewandten Seitenfläche der Lasche erstreckt; und/oder dass
- jeder Haltevorsprung (121A, 121B) über eine Materialbrücke (127), mit im Vergleich zum Haltevorsprung (121A, 121B) größerer Wandstärke, einstückig mit der Lasche verbunden ist; und/oder
-- wobei die Kunststofflasche eine Innenlasche bzw. Außenlasche ist, weiterhin **dadurch gekennzeichnet, dass** zwei Haltevorsprünge (121A, 121B) eine gemeinsame Laschenöffnung (126) durch den Mittelbereich überdecken und vorzugsweise einstückig mit einer verstärkten Materialbrücke (127) über der Laschenöffnung (126) geformt sind; und/oder
**--** Kunststofflasche, weiterhin **dadurch gekennzeichnet, dass** die Laschenöffnung (126) einen kantenfreien, vorzugsweise im Wesentlichen elliptischen Grundriss in der Laschenhauptebene und/oder der dem Überlappungsbereich zugewandte Rand (128) der Laschenöffnung (126) jeweils deckungsgleich mit dem vorstehenden Rand (131A, 131B) des Haltevorsprungs fluchtet.

9. Energieführungskette bzw. Kunststofflasche nach einem der vorstehenden Ansprüche, **dadurch gekennzeichnet, dass** zur Schwenkwinkelbegrenzung ein Überlappungsbereich (104A, 104B) mindestens drei Anschlagvorsprünge (107) die jeweils zwei Anschlagflächen (107A, 107B) bildet und der dazu komplementäre Überlappungsbereich (103A, 103B) mindestens drei entsprechende Aufnahmen (108) aufweist mit jeweils zwei Gegenanschlagflächen (108A, 108B),
- vorzugsweise weiterhin **dadurch gekennzeichnet, dass** jeweils der Überlappungsbereich, welcher mit seinem Führungsbereich in den Freiraum (123) des Haltevorsprungs (121A, 121B) eingreift, die Anschlagvorsprünge sowie einen einstückigen Schwenkzapfen (110) aufweist, wobei die Anschlagvorsprünge (107) und der Schwenkzapfen seitlich versetzt zum Führungsbereich (120A, 120B) und/oder entgegengesetzt zum Haltevorsprung (121A, 121B) aus der Schwenkebene vorstehen.

10. Energieführungskette bzw. Kunststofflasche nach einem der vorstehenden Ansprüche, **dadurch gekennzeichnet**,
- dass der Haltevorsprung (121A, 121B) seitlich nicht über die äußere Laschenfläche vorsteht und/oder bündig mit der äußeren Laschenfläche abschließt; und/oder
- dass der Haltevorsprung (121A, 121B) eine innere Haltefläche (125) zum Überlappen des Führungsbereichs bildet, welche weitgehend parallel zur Verschwenkebene ausgeführt ist.

11. Energieführungskette bzw. Kunststofflasche nach einem der vorstehenden Ansprüche, **dadurch gekennzeichnet**,
- dass jeder Haltevorsprung (121A, 121B) spiegelsymmetrisch zur Laschen-Längsmittelebene und/oder Laschen-Höhenmittelebene (M) ausgeführt und/oder mittig in Bezug auf die Laschenhöhe (H) angeordnet ist, wobei vorzugsweise die wirksame Höhenabmessung (h1) des Haltevorsprungs <40% der Laschenhöhe beträgt.
- insbesondere weiterhin **dadurch gekennzeichnet, dass** beidseitig spiegelsymmetrisch zum Haltevorsprung (121A, 121B) jeweils ein vorsprungfreier Querwandbereich (124) verläuft.

12. Energieführungskette bzw. Kunststofflasche nach einem der vorstehenden Ansprüche, **dadurch gekennzeichnet, dass** der vorstehende Rand (131A, 131B) des Haltevorsprungs konvex zur Schwenkachse (A) ausgebaucht ist**.**

13. Energieführungskette bzw. Kunststofflasche nach einem der vorstehenden Ansprüche, **dadurch gekennzeichnet, dass** der kreisbogenförmige Führungsbereich (120A, 120B) zum Eingriff hinter den Haltevorsprung (121A, 121B) ein stirnseitig am Überlappungsbereich (103A, 103B) vorstehendes Kreisbogensegment aufweist, dessen Querschnitt gegenüber der Außenfläche des Überlappungsbereichs (103A, 103B) zurückspringt.

14. Energieführungskette bzw. Kunststofflasche nach einem der vorstehenden Ansprüche, **dadurch gekennzeichnet, dass** der Haltevorsprung (121A, 121B) und/oder der Führungsbereich (120A, 120B) so angeordnet ist, dass der Führungsbereich (120A, 120B) im Wesentlichen über den gesamten Verschwenkwinkel in den Freiraum (123) des Haltevorsprungs eingreift; und/oder dass an der Innenseite des Mittelbereichs (106) der Kunststofflasche, insbesondere der Außenlasche (102), Querstege befestigt sind, wobei die Querstege an ihren Enden so aufgeweitet sind, dass die aufgeweiteten Enden der Querstege die Innenwand des angrenzenden Überlappungsbereichs (103A, 103B), einer im Laschenstrang benachbarten Lasche, insbesondere einer Innenlasche (101), übergreifen.

15. Energieführungskette bzw. Kunststofflasche nach einem der vorstehenden Ansprüche, **dadurch gekennzeichnet, dass** jede Lasche (101, 102; 200) einstückig aus einem spritzgussfähigen Kunststoff, insbesondere aus faserverstärktem Thermoplast, hergestellt ist.
